# FASCICULE DE BREVET EUROPEEN

(11) **EP 1 639 271 B1**
(45) Date de publication et mention de la délivrance du brevet: **10.03.2010**
(21) Numéro de dépôt: 04767231.6
(22) Date de dépôt: 02.06.2004
(51) Int. Cl.: F16H 7/24

(54) **OUTIL DE MONTAGE D'UNE COURROIE DANS LA GORGE D'UNE POULIE**
WERKZEUG ZUR EINFÜHRUNG EINES ANTRIEBSRIEMENS IN DIE NUT EINER RIEMENSCHEIBE
TOOL FOR INTRODUCING A DRIVE BELT INTO THE GROOVE OF A PULLEY

(30) Priorité: 04.06.2003 FR 0306754
(43) Date de publication de la demande: 29.03.2006
(73) Titulaire: HUTCHINSON, 75008 Paris (FR)
(72) Inventeur: RIAUDEL, Thierry, F-37270 Veretz (FR)
(74) Mandataire: Jacquard, Philippe Jean-Luc
(86) Numéro de dépôt international: PCT/FR2004/001360
(87) Numéro de publication internationale: WO 2004/109156

(56) Documents cités:
- DE-C- 590 763
- US-A- 298 929
- US-A- 415 921
- US-A- 551 486
- US-A- 588 838
- US-A- 774 576
- US-A- 1 573 651

## Description

La présente invention a pour objet un outil de montage d'une courroie dans la gorge d'une poulie. Elle s'applique plus particulièrement aux courroies de transmission de puissance et plus particulièrement au domaine automobile, au domaine électroménager et à l'industrie.

La Société Demanderesse commercialise, notamment en tant que courroie destinée à l'entraînement des accessoires (alternateur, climatisation, etc...) automobile, une courroie qu'il est possible de monter par mise en extension, et qui après mise en place dans un système de transmission, maintiennent une tension suffisante pendant toute la durée de vie de la courroie, sans qu'il y ait besoin de la mettre en tension par un tendeur fixe.

La mise en place de cette courroie (dite de type « snap-on ») implique des contraintes importantes, et elle s'effectue en général à l'aide d'un outil de montage, que ce soit en usine (« première monte ») ou en rechange.

On connaît déjà des outils de montage qui impliquent de disposer une partie de l'outil en contact avec le fond de la gorge de la poulie. De tels outils sont en particulier décrits dans les Brevets Américains US 3 138 963 (PRINCE), US 4,111,063 (JOURNEY), et US 4 109 544 (CLARK).

L'inconvénient de ces dispositifs est qu'ils ne peuvent convenir qu'à des courroies transmettant de faibles puissances, car ils rentrent directement en contact avec la gorge de la poulie, qu'ils risquent d'endommager.

Ce risque est d'autant plus élevé avec les courroies automobiles (en général du type K) qui présentent une pluralité de stries auxquelles correspondent le profil complémentaire du fond de gorge des poulies.

Un autre outil de montage, à levier, a été proposé dans le Brevet US 5 653 654 (DAVIS). Il comporte deux doigts 20 et 21 formant levier. Pour l'utiliser, il faut au préalable relâcher la tension de la courroie, ce qui n'est pas compatible avec une courroie de type « snap-on » pour lequel le système de transmission est justement dépourvu d'un tendeur permettant une telle opération.

D'autres tendeurs de courroies plus particulièrement destinés aux courroies de ce type ont été proposés pour des applications automobiles. On se référera en particulier au Brevet Européen EP 831 247. Ce type d'outil s'appuie sur la joue et le bord de la poulie.

Ceci a plusieurs conséquences :
- d'une part, la forme de l'outil est relativement compliquée,
- d'autre part, la courbure de l'outil est définie par la courbure de la poulie, ce qui fait qu'il y a nécessairement autant de modèles d'outils qu'il a de diamètres de poulies,
- et enfin, de par sa position l'outil occupe un espace latéral non négligeable.

On connaît par ailleurs des outils de montage de conception ancienne dont la structure est compliquée et/ou peu ergonomique. Ainsi, le Brevet US 774 576 (GARMAN) propose un outil ayant deux plaques de base imbriquées, ou bien le Brevet US 551 486 (BRION) qui propose un outil à deux pièces indépendantes réglables par vis et qui sont reliées par l'intérieur de la poulie, ou bien encore le Brevet US 415 921 (NICHOLS) dont l'agencement est complexe, et enfin le Brevet US 298 929 (WILSON) qui présente la même difficulté.

La présente invention a pour objet un outil de montage qui ne présente pas l'un au moins des inconvénients précités.

L'inconvénient concerne ainsi un outil de montage d'une courroie dans la gorge striée ou non d'une poulie tel que défini dans la revendication 1.

Les pattes de maintien sont ainsi mobiles en translation l'une par rapport à l'autre de manière à faire varier leur distance en fonction de la largeur de la poulie, un moyen (dispositif de verrouillage, etc...) étant prévu pour fixer la position relative des pattes de maintien.

La patte de guidage peut être portée par la pièce mobile en translation.

Elle peut être également solidaire de la plaque de base, en particulier au niveau de la deuxième patte de maintien qui est fixe.

La deuxième patte de maintien peut être une extrémité repliée de la plaque de base.

Pour permettre le réglage de la distance entre les pattes d'appui, ladite face d'appui peut présenter un doigt coopérant avec des trous aménagés dans la plaque de base, ou bien un bord profilé coopérant par effet de cliquet avec des stries ménagées dans la première face de la plaque de base.

L'outil de montage peut être **caractérisé en ce que** la patte de guidage s'étend sensiblement perpendiculairement à ladite deuxième face et présente au moins une région plane formant un angle avec la première patte de maintien cette région plane étant tournée vers l'extérieur d'un périmètre délimité par la plaque de base et les première et deuxième pattes de maintien, et situé au moins en partie en dehors de ce périmètre.

Deux dites régions planes peuvent être disposées de préférence symétriquement, aux extrémités d'une région centrale, laquelle est de préférence à l'aplomb de la première patte de maintien.

L'outil de montage peut être caractérisé en ce que la patte de guidage s'étend sensiblement perpendiculairement à ladite deuxième face et présente au moins une région incurvée vers l'extérieur d'un périmètre délimité par la plaque de base et la première et la deuxième patte de maintien, et située au moins en partie à l'extérieur de ce périmètre.

Il peut présenter deux dites régions incurvées disposées, de préférence systématiquement, de part et d'autre d'une région centrale, laquelle est de préférence à l'aplomb de la première patte de maintien.

La région centrale est avantageusement plane, et elle peut s'étendre sensiblement entre deux bords opposés de la plaque de base.

D'autres caractéristiques et avantages de l'invention apparaissent à la lecture de la description ci-après, en liaison avec les dessins dans lesquels:
- la figure 1a montre en perspective un mode de réalisation d'un outil de pose selon l'invention, la figure 1b illustrant une configuration au cours de la pose, la figure 1c étant une coupe transversale de la figure 1a, prise dans le plan d'un flanc de poulie.
- les figures 2a à 2d illustrent le séquencemement de la pose d'une courroie avec un outil de pose selon l'invention, en l'occurrence, celui des figures 1a et 1b.
- Les figures 3a à 3d illustrent le réglage de distance entre les pattes de maintien, dans le cas de l'outil de pose des figures 1a et 1b, et les figures 3e et 3g illustrent les forces et les couples générés au cours de la pose.
- les figures 4, 7a et 7b, représentent des variantes d'un outil de pose selon l'invention.
- les figures 5 et 6 représentent d'autres variantes d'un outil de pose, ne correspondant pas à l'objet des revendications, mais qui illustre des moyens de réglage de la position relative des pattes de maintien.

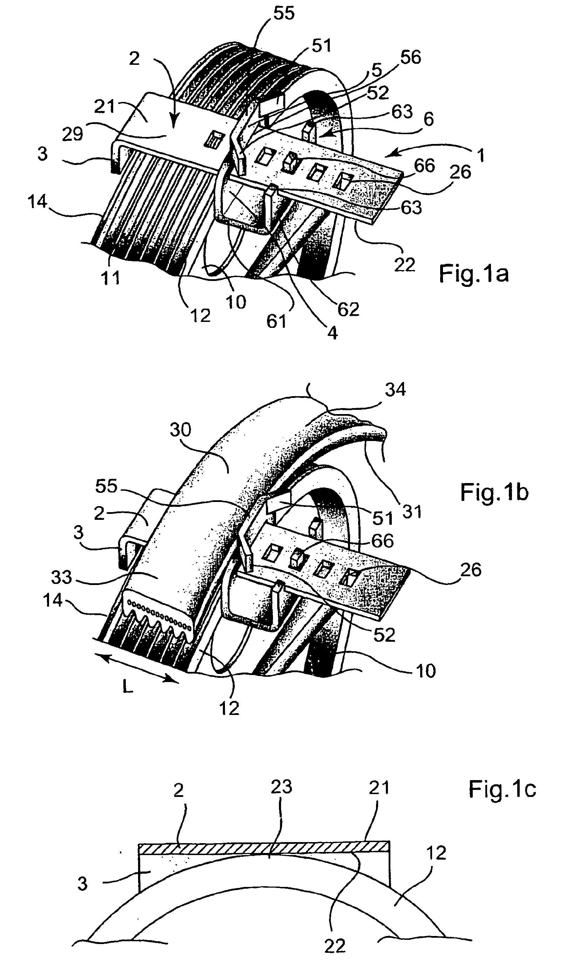

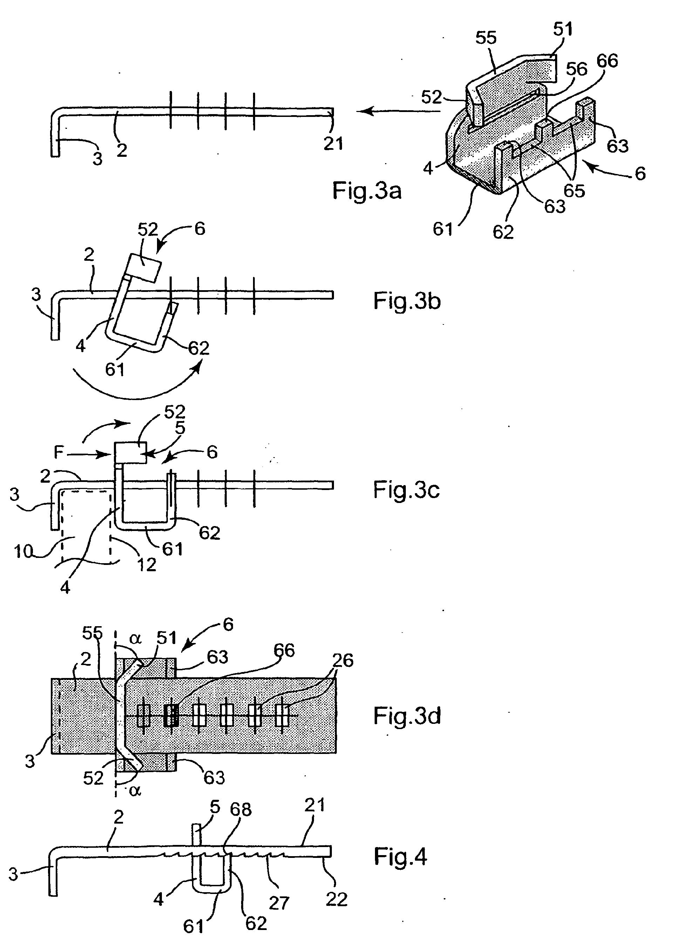

Comme représenté à la figure 1a, un outil de montage désigné par le repère général 1 présente une plaque de base 2 plane de forme générale rectangulaire qui présente une extrémité recourbée 3 formant une première patte de maintien. Une pièce 6 pourvue d'une fente rectangulaire 56 qui permet le passage de la plaque de base 2 peut coulisser longitudinalement le long de celle-ci. La pièce 6 présente en coupe la forme générale d'un U, avec une partie centrale 61, bordée d'une part, d'une branche 4 formant une deuxième patte de maintien et dans laquelle est ménagée la fente rectangulaire 56, et d'autre part, d'une branche 62 qui présente une face d'appui 65 pour la face inférieure 22 de la plaque de base 2 (voir également la Figure 3a). Cette face d'appui 65 présente à sa partie centrale un ergot 66 qui peut être introduit dans l'une des ouvertures 26 ménagée le long de la plaque de base 2 pour fixer la distance entre les pattes de maintien 3 et 4. Cette distance correspond sensiblement à des valeurs de largeur L d'une poulie telle que la poulie 10 de la figure 1a que chevauche l'outil 1. Une patte de guidage 5 s'étend au dessus de la face supérieure 21 de la plaque de base 2 et forme un prolongement de la patte 4.

Cette patte de guidage 5 présente au moins une région de guidage 51 plane ou incurvée, qui est inclinée vers l'extérieur de la poulie 10 (notamment selon un angle α (Figure 3d) inférieur à 30°, par exemple α = 25°) et qui est située en dehors du périmètre délimité par les pattes 3 et 4 et la partie 29 de la plaque de base 2 située entre les pattes 3 et 4. Une partie centrale plane 55 prolonge vers le haut la patte 4. La région de guidage 51 a pour fonction de diriger vers la poulie 10 la courroie 30 en vue de sa mise en place, alors que la partie centrale plane 55 guide latéralement la courroie 30 lorsqu'elle passe sur la partie 29 de la face supérieure 21. Une région de guidage 52 symétrique de la région de guidage 51 peut être ménagée de l'autre côté de la partie centrale 55, ce qui permet deux sens de rotation pour le montage, toutes choses égales par ailleurs.

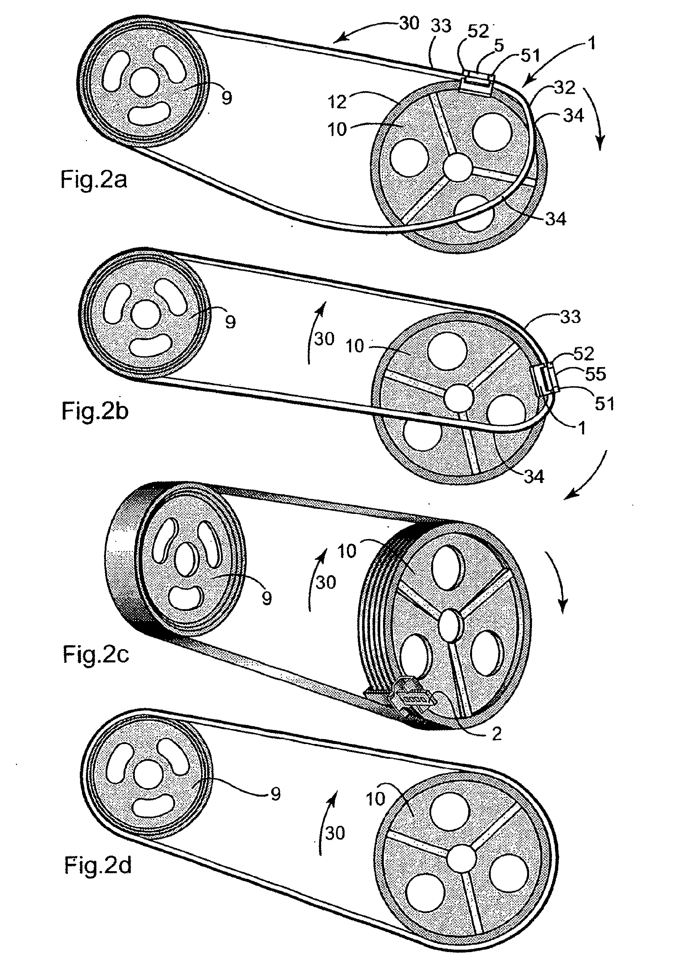

Le montage de la courroie est décrit en rapport avec les figures 2a à 2b.

A la figure 2a, l'outil est disposé à cheval sur la poulie 10, et la courroie à l'état détendu est posée sur la région 29 de la plaque de base 2 comme représenté aux figures 1b et 2a, une courte section 33 de la courroie 30 se trouvant déjà dans la gorge 11 de la poulie 10 en amont de l'outil de montage 1. En aval de l'outil de montage 1, le brin 34 est libre et déborde latéralement du bord 12 de la poulie 10. Ensuite, manuellement ou à l'aide d'un outil, on fait tourner la poulie 10 (dans le sens des aiguilles d'une montre sur la Figure 2a) ce qui a pour effet de chausser progressivement la courroie 30 en augmentant progressivement la longueur du brin 33 logé dans la gorge 11. En effet, la région de guidage 51 appuie sur le bord 32 de la courroie 30 dans la région 34 et guide la courroie vers la région 29 de la face supérieure 21.

Par rotation de la poulie 10 (ou déplacement de l'outil 1 sur son périmètre), on chausse complètement la courroie (Figure 2c) et l'outil peut être récupéré (Figure 2c). Le montage de la courroie est alors achevé (Figure 2d).

Comme le montre la figure 1c, la mise en oeuvre d'une plaque de base 2 plane fait qu'il n'y a que deux segments de droite 23 en contact entre la face inférieure 22 de la plaque de base 2 et les bords 12 et 14 de la poulie 10. L'outil 1 peut donc être utilisé pour tout diamètre de poulie.

La courroie 30 du fait de son passage sur la région 29 de la plaque 2 est introduite quasiment axialement dans la gorge 11 de la poulie 10, sans venir frotter sur les bords 12 de la poulie 30.

Le réglage de la distance entre les pattes d'appui 3 et 4 est illustré par les figures 3a à 3d.

Le montage de l'outil s'effectue simplement en introduisant l'extrémité libre 21 de la plaque de base 2 dans la fente 56 de la pièce 6 (Figure 3a).

Ce jeu entre la fente 56 et la plaque 2 permet de déverrouiller par basculement la pièce 6 ce qui autorise le déplacement longitudinal de la pièce 6 (Figure 3b). Par rotation inverse, la pièce 6 est mise en place, l'ergot 66 étant introduit dans un des trous 26 (Figure 3c et 3d).

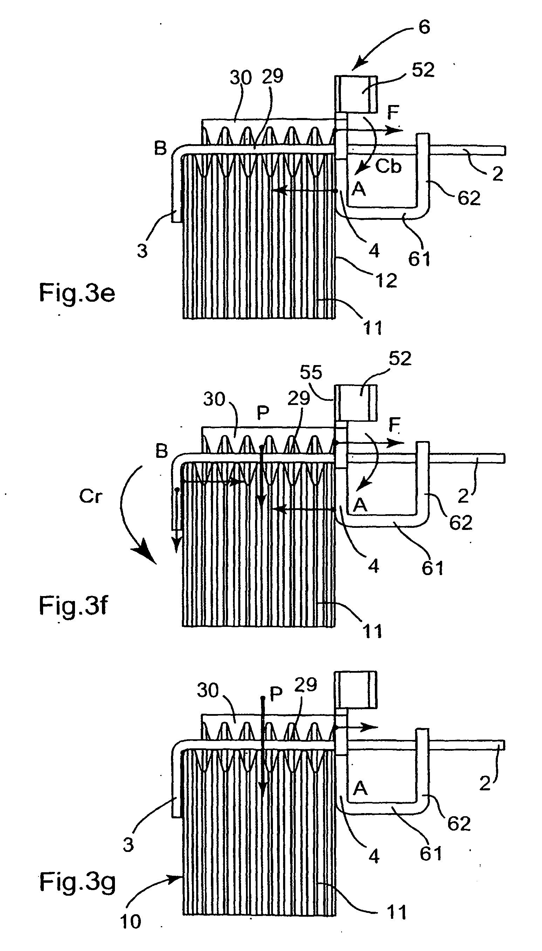

Après mise en place à cheval sur la poulie 10 et au départ de la rotation (Figures 3c et 3e), la force latérale F exercée par le bord 32 de la courroie lors de sa mise en place induit un couple de basculement C_{b} qui permet un autoblocage de la patte 4 contre le flanc 12 de la poulie 10, ce qui verrouille positivement l'ensemble. Après ce blocage (Figure 3f), la pression P exercée par la courroie sur la région 29 étant faible, c'est l'effet de contre-couple Cᵣ induit par la force F et par l'appui de la patte 3 en B sur le flanc 14 et de la patte 3 en A sur le flanc 12 qui permet le maintien en équilibre de l'outil pendant toute la rotation. L'outil serre alors la poulie entre les points A et B. Après une rotation plus importante, la courroie est déjà engagée dans la gorge de la poulie et c'est l'effet de la pression supplémentaire P sur la région 29 qui permet le maintien de l'outil en place. En fin de montage (Figure 3g), il n'y a plus que cet effet de pression P, car la courroie n'exerce plus d'effort latéral.

Dans le mode de réalisation de la figure 4, la distance entre les pattes 3 et 4 est réglé à l'aide d'un dispositif à cliquet (68, 27), une rampe striée 27 étant ménagée à cet effet à la face inférieure 22 de la plaque de base 2, et coopérant avec un bord incliné 68 de la branche 62 sur lequel s'appuie la plaque de base 2.

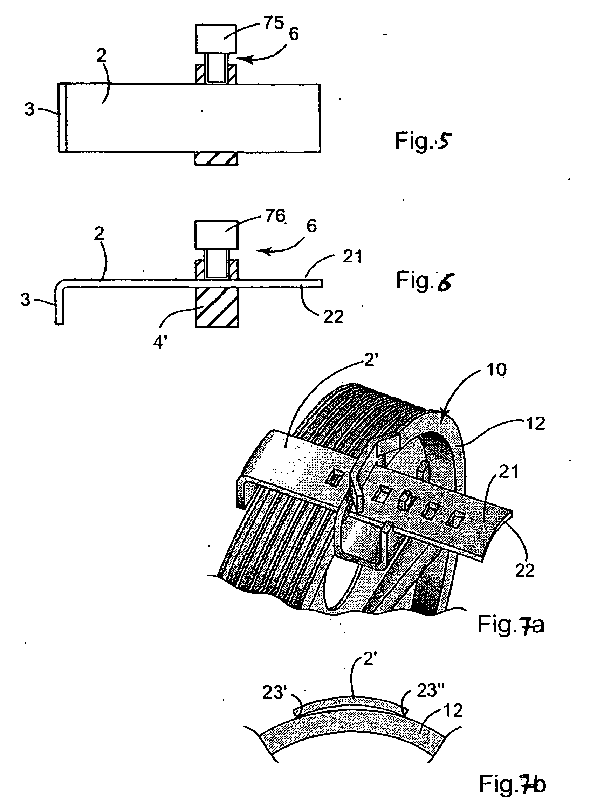

Dans les figures 5 et 6, la fixation est effectuée par vis, soit latéralement (Figure 5) soit entre les faces 21 et 22 de la plaque 2 (Figure 6).

Dans les modes de réalisation des figures 7a et 7b, la plaque 2' est cylindrique, avec sa concavité dirigée vers les pattes 3 et 4 (et donc vers la poulie 10). Les pattes 3 et 4 sont perpendiculaires à l'axe des cylindres. Dans cette configuration, il y a deux paires de segments de droite 23' et 23" en contact entre la face inférieure 22 et les bords 12 et 14 de la poulie 10 (Figure 9b), dans le cas où la courbure de la plaque 2 est plus accentuée que celle de la poulie 10

Dans le cas contraire, il n'y a qu'une paire de segments 23 comme dans le cas de la Figure 1c. L'outil peut dans ce cas également être utilisé quel que soit le diamètre de la poulie 10. En tout état de cause, la présence d'une face 21 convexe contribue à un meilleur guidage de la courroie 30 dans la région 29.

D'autres variantes de réalisation sont possibles. Ainsi la ou les pattes de guidages peuvent être incurvées vers l'extérieur (en étant convexes en direction de la poulie). Dans les modes de réalisation précédents, la région centrale plane 55 peut être omise.

L'outil peut être utilisé pour le montage de tout type de courroie (notamment courroie striée « poly-V » de type H, J, K ou L) sur des poulies lisses ou striées. Il peut également être utilisé avec des poulies à muret, avec l'inconvénient toutefois que la courroie sera déformée et portée à une tension plus élevée par le rebord de la forme en S liée au muret.

## Revendications

1. Outil de montage d'une courroie dans la gorge d'une poulie comportant:
- une plaque de base unique (2), ayant une première (22) et une deuxième (21) face, cette plaque étant plane ou bien formant une partie de cylindre, la première face (22) étant alors concave,
- une première (4) et une deuxième (3) pattes de maintien sensiblement planes qui sont parallèles entre elles, qui sont espacées l'une de l'autre et qui s'étendent à partir de la première face (22) de la plaque de base (2) et perpendiculairement à celle-ci si elle est plane, ou à l'axe dudit cylindre, si la plaque forme une partie de cylindre,
- une patte de guidage (5) qui s'étend à partir d'une deuxième face (21) de la plaque opposée à la première face (22).
en ce que la première patte de maintien (4) est portée par une pièce (6) mobile en translation par rapport à la deuxième patte de maintien (3) qui est solidaire de la plaque de base (2), de manière à faire varier leur distance en fonction de la largeur L de la poulie, un moyen (26, 66, 62, 68, 75, 76, 77) étant prévu pour régler la position relative des pattes de maintien (3, 4) et en ce que la pièce mobile en translation (6) présente une structure à deux branches (4, 62) reliées entre elles par une partie centrale (61), une des branches (4) qui définit la première patte de maintien présentant une ouverture (56) permettant le passage de la plaque de base (2) et l'autre branche (62) présentant une face d'appui (65) pour la première face (22) de la plaque de base (2).

2. Outil de montage selon la revendication 1, **caractérisé en ce que** la patte de guidage (5) est portée par ladite pièce (6) mobile en translation.

3. Outil de montage selon la revendication 1, **caractérisé en ce que** la patte de guidage (5) est solidaire de la plaque de base (2).

4. Outil de montage selon une des revendications 1 à 3, **caractérisé en ce que** la deuxième patte de maintien (3) est une extrémité repliée de la plaque de base (2).

5. Outil de montage selon une des revendications précédentes, **caractérisé en ce que** ladite face d'appui (65) présente un doigt (66) coopérant avec des trous (26) ménagés dans la plaque de base (2).

6. Outil de montage selon une des revendications précédentes, **caractérisé en ce que** ladite face d'appui (65) présente un bord profilé (68) coopérant par effet de cliquet avec des stries (27) ménagées dans la première face (22) de la plaque de base (2).

7. Outil de montage selon une des revendications précédentes, **caractérisé en ce que** la patte de guidage (5) s'étend sensiblement perpendiculairement à ladite deuxième face et présente au moins une région plane (51) formant un angle avec la première patte de maintien (4), cette région plane (51) étant tournée vers l'extérieur d'un périmètre délimité par la plaque de base et les première (4) et deuxième pattes (3) de maintien, et étant située au moins en partie en dehors de ce périmètre.

8. Outil de montage selon la revendication 7, **caractérisé en ce qu'**il comporte deux dites régions planes (51, 52) disposées aux extrémités d'une région centrale (55).

9. Outil de montage selon une des revendications précédentes, **caractérisé en ce que** la patte de guidage (5) s'étend sensiblement perpendiculairement à ladite deuxième face (21) et présente au moins une région (51) incurvée vers l'extérieur d'un périmètre délimité par la plaque de base (2) et la première (4) et deuxième (3) patte de maintien et située au moins en partie à l'extérieur de ce périmètre.

10. Outil de montage selon la revendication 9, **caractérisé en ce que** la patte de guidage (5) comporte deux dits régions incurvées (51, 52) situées de part et d'autre d'une région centrale (55).

11. **Outil de montage selon une des revendications 8 ou 10,**
**caractérisé en ce que** la région centrale (55) est située à l'aplomb de la première patte de maintien (4).

12. Outil de montage selon un des revendications 8 ou 10, **caractérisé en ce que** la région centrale (55) est plane.

13. Outil de montage selon la revendication 12, **caractérisé en ce que** la région centrale s'étend sensiblement entre deux bords opposés de la plaque de base (55).

## Claims

1. Tool for fitting a belt into the groove of a pulley, comprising:
- a single base plate (2) having a first (22) and a second (21) face, this plate being flat or forming a part of a cylinder, the first face (22) then being concave;
- a first (4) and a second (3) holding member that are substantially flat and that are parallel with each other, which are spaced apart from one another and which extend from the first face (22) of the base plate (2) and perpendicular to the base plate if it is flat, or to the axis of the said cylinder if the plate forms a part of a cylinder; and
- a guide member (5) which extends from a second face (21) of the plate opposite to the first face (22), **characterized in that** the first holding member (4) is borne by a part (6) that can move in translation with respect to the second holding member (3) which is integral with the base plate (2), in such a way as to vary their distance according to the width L of the pulley, a means (26, 66, 62, 68, 75, 76, 77) being produced for adjusting the relative position of the holding members (3, 4), and **in that** the part (6) that can move in translation has a structure with two branches (4, 62) connected to each other by a central section (61), one of the branches (4) which defines the first holding member having an opening (56) allowing the passage of the base plate (2) and the other branch (62) having a bearing face (65) for the first face (22) of the base plate (2).

2. Fitting tool according to Claim 1, **characterized in that** the guide member (5) is borne by the said part (6) that can move in translation.

3. Fitting tool according to Claim 1, **characterized in that** the guide member (5) is integral with the base plate (2).

4. Fitting tool according to one of Claims 1 to 3, **characterized in that** the second holding member (3) is a folded-down end of the base plate (2).

5. Fitting tool according to one of the preceding claims, **characterized in that** the said bearing face (65) has a finger (66) cooperating with holes (26) formed in the base plate (2).

6. Fitting tool according to one of the preceding claims, **characterized in that** the said bearing face (65) has a profiled edge (68) cooperating by ratchet effect with serrations (27) formed in the first face (22) of the base plate (2).

7. Fitting tool according to one of the preceding claims, **characterized in that** the guide member (5) extends substantially perpendicular to the said second face and has at least one flat region (51) forming an angle with the first holding member (4), this flat region (51) facing the outside of a perimeter delimited by the base plate and the first (4) and second (3) holding members, and being located at least partly outside of this perimeter.

8. Fitting tool according to Claim 7, **characterized in that** it comprises two said flat regions (51, 52) disposed at the ends of a central region (55).

9. Fitting tool according to one of the preceding claims, **characterized in that** the guide member (5) extends substantially perpendicular to the said second face (21) and has at least one region (51) curved toward the outside of a perimeter delimited by the base plate (2) and the first (4) and second (3) holding members and located at least partly outside of this perimeter.

10. Fitting tool according to Claim 9, **characterized in that** the guide member (5) comprises two said curved regions (51, 52) located on either side of a central region (55).

11. Fitting tool according to either of Claims 8 and 10, **characterized in that** the central region (55) is located plumb with the first holding member (4).

12. Fitting tool according to either of Claims 8 and 10, **characterized in that** the central region (55) is flat.

13. Fitting tool according to Claim 12, **characterized in that** the central region extends substantially between two opposite edges of the base plate (55).

## Patentansprüche

1. Werkzeug zur Anbringung eines Riemens in einer Kehle einer Rolle, umfassend:
- eine einzige Basisplatte (2), welche eine erste (22) und eine zweite (21) Seite aufweist, wobei diese Platte eben ist oder einen Zylinderabschnitt bildet, wobei dann die erste Seite (22) konkav ist;
eine erste (4) und eine zweite (3) im Wesentlichen ebene Haltelasche, welche zueinander parallel sind, welche voneinander beabstandet sind und welche sich ausgehend von der ersten Seite (22) der Basisplatte (2) und, wenn sie eben ist, senkrecht zu dieser oder, wenn die Platte einen Zylinderabschnitt bildet, senkrecht zu der Achse des Zylinders erstrecken,
- eine Führungslasche (5), welche sich ausgehend von einer der ersten Seite (22) gegenüberliegenden zweiten Seite (21) der Platte erstreckt,
und dass die erste Haltelasche (4) getragen ist von einem Teil (6), welches im Verhältnis zu der zweiten Haltelasche (3), welche fest an der Basisplatte (2) angebracht ist, derart translationsbeweglich ist, dass ihr Abstand in Abhängigkeit von der Breite L der Rolle variiert, wobei ein Mittel (26, 66, 62, 68, 75, 76, 77) vorgesehen ist, um die relative Position der Haltelaschen (3, 4) einzustellen, und dass das translationsbewegliche Teil (6) eine Struktur mit zwei Schenkeln (4, 62) aufweist, welche untereinander durch einen Zentralabschnitt (61) verbunden sind, wobei einer der Schenkel (4), welcher die erste Haltelatsche definiert, eine Öffnung (56) aufweist, welche den Durchgang der Basisplatte (2) ermöglicht, und der andere Schenkel (62) eine Auflagefläche (65) für die erste Seite (22) der Basisplatte (2) aufweist.

2. Anbringungswerkzeug nach Anspruch 1, **dadurch gekennzeichnet, dass** die Führungslasche (5) von dem translationsbeweglichen Teil (6) getragen ist.

3. Anbringungswerkzeug nach Anspruch 1, **dadurch gekennzeichnet, dass** die Führungslasche (5) fest an der Basisplatte (2) angebracht ist.

4. Anbringungswerkzeug nach einem der Ansprüche 1-3, **dadurch gekennzeichnet, dass** die zweite Haltelasche (3) ein gefaltetes Ende der Basisplatte (2) ist.

5. Anbringungswerkzeug nach einem der vorhergehenden Ansprüche, **dadurch gekennzeichnet, dass** die Auflagefläche (65) einen Stift (66) aufweist, welcher mit in der Basisplatte (2) ausgesparten Löchern (26) zusammenwirkt.

6. Anbringungswerkzeug nach einem der vorhergehenden Ansprüche, **dadurch gekennzeichnet, dass** die Auflagefläche (65) eine profilierte Kante (68) aufweist, welche durch Klinkeffekt mit in der ersten Seite (22) der Basisplatte (2) ausgesparten Riefen (27) zusammenwirkt.

7. Anbringungswerkzeug nach einem der vorhergehenden Ansprüche, **dadurch gekennzeichnet, dass** die Führungslasche (5) sich im Wesentlichen senkrecht zu der zweiten Seite erstreckt und wenigstens einen ebenen Bereich (51) aufweist, welcher einen Winkel mit der ersten Haltelasche (4) bildet, wobei dieser ebene Bereich (51) in Richtung der Außenseite eines Umfangs gewandt ist, welcher durch die Basisplatte und die erste (4) und zweite (3) Haltelasche begrenzt ist, und sich wenigstens teilweise außerhalb dieses Umfangs befindet.

8. Anbringungswerkzeug nach Anspruch 7, **dadurch gekennzeichnet, dass** es zwei der ebenen Bereiche (51, 52) umfasst, welche an den Enden eines Zentralbereichs (55) angeordnet sind.

9. Anbringungswerkzeug nach einem der vorhergehenden Ansprüche, **dadurch gekennzeichnet, dass** die Führungslasche (5) sich im Wesentlichen senkrecht zu der zweiten Seite (21) erstreckt und wenigstens einen Bereich (51) aufweist, welcher in Richtung der Außenseite eines Umfangs gekrümmt ist, der durch die Basisplatte (2) und die erste (4) und zweite (3) Haltelasche begrenzten Umfangs gekrümmt ist und sich wenigstens teilweise auf der Außenseite dieses Umfangs befindet.

10. Anbringungswerkzeug nach Anspruch 9, **dadurch gekennzeichnet, dass** die Führungslasche (5) zwei der gekrümmten Bereiche (51, 52) umfasst, welche sich auf beiden Seiten eines Zentralbereichs (55) befinden.

11. Anbringungswerkzeug nach einem der Ansprüche 8 oder 10, **dadurch gekennzeichnet, dass** der Zentralbereich (55) sich im Lot zu der ersten Halteplatte (4) befindet.

12. Anbringungswerkzeug nach einem der Ansprüche 8 oder 10, **dadurch gekennzeichnet, dass** der Zentralbereich (55) eben ist.

13. Anbringungswerkzeug nach Anspruch 12, **dadurch gekennzeichnet, dass** der Zentralbereich sich im Wesentlichen zwischen zwei gegenüberliegenden Kanten der Basisplatte (55) erstreckt.
